# EUROPEAN PATENT SPECIFICATION

(11) **EP 4 207 402 B1**
(45) Date of publication and mention of the grant of the patent: **11.09.2024**
(21) Application number: 22198422.2
(22) Date of filing: 28.09.2022
(51) Int. Cl.: H01M 8/04492, H01M 8/04828

(54) **SYSTEM AND METHOD FOR CONTROLLING AND MONITORING A FUEL CELL STACK USING CATHODE EXHAUST HUMIDITY**
SYSTEM UND VERFAHREN ZUR STEUERUNG UND ÜBERWACHUNG EINES BRENNSTOFFZELLENSTAPELS MITTELS KATHODENABGASFEUCHTIGKEIT
SYSTÈME ET PROCÉDÉ DE COMMANDE ET DE SURVEILLANCE D'UN EMPILEMENT DE PILES À COMBUSTIBLE À L'AIDE DE L'HUMIDITÉ D'ÉCHAPPEMENT DE CATHODE

(30) Priority: 01.10.2021 US 202163251403 P
(43) Date of publication of application: 05.07.2023
(73) Proprietor: Cummins, Inc., Columbus, Indiana 47201 (US); Hydrogenics Corporation, Mississauga, ON L5T 2N6 (CA)
(72) Inventor: Ancimer, Richard J., Toronto, M6S 3R7 (CA); Rizzi, Justin, Oshawa, L1H 6X8 (CA); Ranieri, Salvatore, Etobicoke, M8Z 0E3 (CA)
(74) Representative: Pinnington, Giles Oliver

(56) References cited:
- WO-A1-2008/119495
- CN-A- 110 212 221
- JP-A- 2009 129 749
- JP-A- 2015 210 871
- US-A1- 2003 141 188
- US-A1- 2005 221 134
- US-A1- 2005 233 182

## Description

### CROSS-REFERENCE TO RELATED APPLICATIONS

This nonprovisional application claims the benefit and priority, under 35 U.S.C. § 119(e) and any other applicable laws or statutes, to U.S. Provisional Patent Application Serial No. 63/251,403 filed on October 1, 2021.

### TECHNICAL FIELD

The present disclosure generally relates to systems and methods for using a relative humidity sensor in the cathode exhaust of a fuel cell stack to optimize the performance and efficiency of the fuel cell stack.

### BACKGROUND

The typical fuel cell engine may comprise several subsystems that enable the transfer of chemical-potential energy into useful electrical-potential energy. The subsystem at the core of the fuel cell engine is a fuel cell stack. The fuel cell stack comprises more than one fuel cell assemblies electrically connected in series, compressed, and bound to provide a simple compact power source. The stack may be supported by additional subsystems to enable operation. The primary subsystems which enable electrochemical reactions in a fuel cell engine comprise a fuel handling subsystem, an air handling subsystem, and/or a coolant subsystem.

The fuel cell stack comprises a structured set of electrodes separated by, in some embodiments, a proton exchange membrane. The proton exchange membrane facilitates the passage of hydrogen nuclei (e.g., a hydrogen atom minus an electron) between the two electrodes. Each electrode is supplied a reactant gas (e.g., hydrogen) at the anode and a reactant gas at the cathode (e.g., oxygen). A chemical reaction occurs at the membrane in which the hydrogen nuclei passing through the membrane combine with the oxygen molecules at the cathode to form water (H₂O). This movement of protons/hydrogen nuclei results in positive electric charge at the cathode, and a negative electric charge at the anode. The differing electric charges at the anode and the cathode permit a voltage potential that can be harnessed as electrical energy and is often used to charge batteries and/or other electronics (e.g., power motors).

Competing requirements for fuel cell stack operation affects the thermodynamic optimization of the fuel cell stack operation. In order for the fuel cell stack to operate effectively and robustly, the electrodes must have both adequate reactant supply and have a low resistivity to nuclei permeation. To prevent fuel cell starvation, the rate of which reactants (e.g., air and hydrogen) is supplied to the reaction site must be greater than or equal to the rate of consumption. Inadequate reactant supply can cause accelerated aging of the fuel cell though carbon corrosion because the fuel cell may start to consume the catalyst support structure in lieu of the preferred reactants.

Nuclei permeation resistance is supported with membrane hydration and may be achieved by retaining some product water within the gas diffusion layer (GDL) and the membrane electrode assembly (MEA). Too little water retention may cause the hydrogen nuclei transfer rate to lessen resulting in a reduction in fuel cell stack performance even though oxygen may be present at the reaction site. Too much water retention may cause blockage of the oxygen by the water molecules, even though the proton permeation characteristics may be adequate. Therefore, control of the parameters that govern relative humidity needs careful consideration.

While there are many parameters affecting fuel cell operation, one target variable is the relative humidity in the fuel cell exhaust. The fuel cell reaction is constrained by the water vapor holding capacity of the cathode air as it passes through the fuel cell stack. The measure of a given air volume's ability to hold water vapor is known as its relative humidity.

Described herein are systems and methods for using a relative humidity sensor in the exhaust stream of the fuel cell stack to optimize the performance and efficiency of the fuel cell stack. Described herein are also systems and methods where the information determined by the relative humidity sensor may be used by a controller or control system in the fuel cell engine comprising the fuel cell stack for closed loop optimization of a fuel cell stack operating state. US2005/221134 A1 discloses an apparatus for operating a fuel cell comprising sensors to measure the outlet relative humidity of the gas outlets of a fuel cell.

### SUMMARY

Embodiments of the present disclosure are included to meet these and other needs.

The present invention provides a fuel cell system according to claim 1, and a method of operating a fuel cell stack according to claim 11. Further embodiments of the present invention are disclosed in the dependent claims.

In some embodiments, the sensor may be a relative humidity sensor and the water content reading may be a relative humidity reading including a water vapor content reading in the cathode exhaust stream. In some embodiments, the controller may use a closed loop optimization of the fuel cell stack based on the relative humidity reading when determining the operation of the fuel cell stack.

In some embodiments, the cathode inlet air stream may be humidified.

In some embodiments, the system may further include an air compressor. The air compressor may provide a conditioned air upstream of the relative humidity sensor and dilute the cathode exhaust steam. Dilution of the cathode exhaust stream may be based on a pressure ratio of the air compressor. Dilution of the cathode exhaust stream may introduce a relative humidity offset proportional to a dilution ratio of the conditioned air to the cathode outlet exhaust. In some embodiments, the conditioned air may be introduced upstream of the relative humidity sensor.

In some embodiments, the relative humidity sensor may be a virtual relative humidity sensor. In some embodiments, a bypass air stream may be introduced upstream of the relative humidity sensor to dilute the cathode exhaust stream. In some embodiments, the relative humidity sensor may be located on a separate cathode exhaust line comprising a heater. The heater may increase the temperature of air in the separate cathode exhaust line by a set amount.

In some embodiments, the sensor may determine the water content in the cathode exhaust stream based on the measurement of oxygen and nitrogen in the cathode exhaust stream.

In some embodiments, the first sensor may be relative humidity sensor, and the method may further include detecting a relative humidity reading with the relative humidity sensor. In some embodiments, adjusting the cathode system may further include determining a target pressure, or a target temperature of a cathode exhaust stream based on the current density of the fuel cell stack, utilizing a second sensor to measure a current pressure or a current temperature in the cathode exhaust stream, changing the current pressure based on the target pressure in the cathode exhaust stream, changing the current temperature in the cathode exhaust stream based on the target temperature, changing a mass flow in the cathode system, or changing a temperature of the cathode exhaust stream.

In some embodiments, the method may further include perturbing the system to cause a change in the water content reading by the first sensor in the cathode exhaust stream, comparing the change in the water content reading to an expected in water content reading in the cathode exhaust stream due to the perturbation. If the change in the water content reading in the cathode exhaust stream is greater than the expected water content reading in the cathode exhaust stream, the fuel cell stack or system may be determined to be operating at greater than about 100% relative humidity. In some embodiments, the difference between the change in the water content reading in the cathode exhaust stream and the expected water content reading in the cathode exhaust stream may be used to offset the operation of the fuel cell stack and/or system in order to ensure that the fuel cell stack and/or system is operating at about 100% relative humidity.

In some embodiments, the method may further include the first sensor determining the water content in the cathode exhaust stream based on oxygen and nitrogen measurements in the cathode exhaust stream. In some embodiments, the system may further include a heat exchanger located downstream of the cathode exhaust port. The relative humidity sensor may be positioned downstream of the heat exchanger at the cathode exhaust port.

### BRIEF DESCRIPTION OF THE DRAWINGS

FIG. 1A is a schematic view of an exemplary fuel cell system including an air delivery system, an electrolyzer, and a fuel cell module including a stack of multiple fuel cells;
FIG. 1B is a cutaway view of an exemplary fuel cell system including an air delivery system, an electrolyzer, and a plurality of fuel cell modules each including multiple fuel cell stacks;
FIG. 1C is a perspective view of an exemplary repeating unit of a fuel cell stack of the fuel cell system of FIG. 1A;
FIG. 1D is a cross-sectional view of an exemplary repeating unit of the fuel cell stack of FIG. 1C;
FIG. 2 is a schematic of one embodiment of a fuel cell stack including a humidity sensor located directly at the cathode exhaust port;
FIG. 3 is a schematic of one embodiment of a fuel cell stack including a humidity sensor located downstream of a heat exchanger;
FIG. 4 is a schematic of one embodiment of a fuel cell stack including a humidity sensor and an air bearing exhaust stream of an air compressor;
FIG. 5 is a schematic of one embodiment of a fuel cell stack including a humidity sensor and conditioned process air in a bypass stream;
FIG. 6 is a schematic of one embodiment of a fuel cell stack including a wide range lambda sensor; and
FIG. 7 is a schematic of one embodiment of a fuel cell stack including a humidity sensor and a heat exchanger is enthalpically decreasing the pressure upstream of the relative humidity sensor.

These and other features, aspects, and advantages of the present invention will become better understood when the following detailed description is read with reference to the accompanying drawings described herein. Reference is also made to the accompanying drawings that form a part hereof and in which is shown by way of illustration specific embodiments in which the invention may be practiced. These embodiments are described in sufficient detail to enable those skilled in the art to practice what is claimed and it is to be understood that other embodiments may be utilized.

The following detailed description is, therefore, not to be taken in a limiting sense.

### DETAILED DESCRIPTION

The present disclosure is directed to systems and methods for using a relative humidity sensor **110** in the exhaust stream of a fuel cell stack **12** to optimize the performance and efficiency of the fuel cell stack **12.** More specifically, a relative humidity sensor **110** used to measure the water vapor content of the fuel cell stack exhaust may provide information that may be used by a controller or control system in a fuel cell engine comprising the fuel cell stack **12** for closed loop optimization of the fuel cell stack operating state.

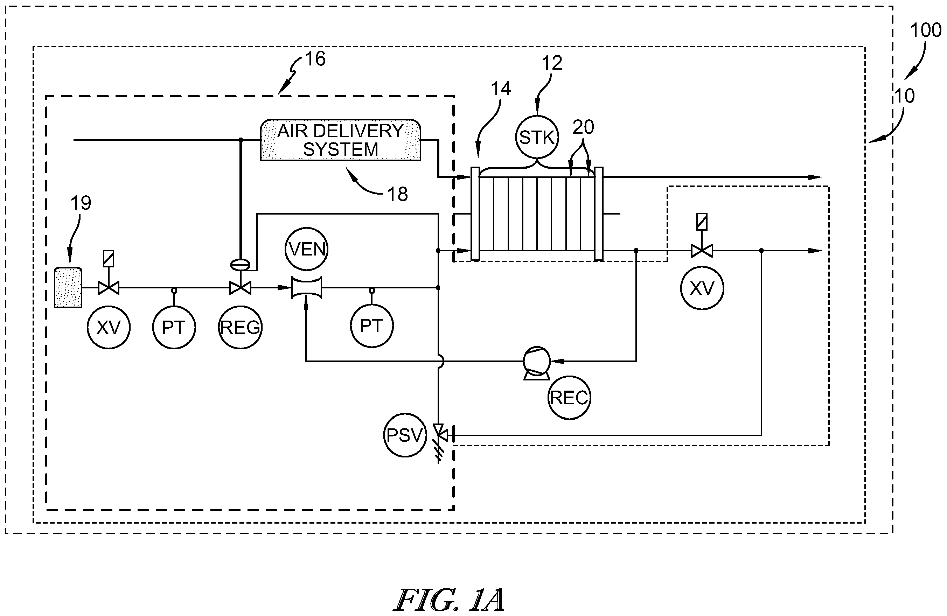

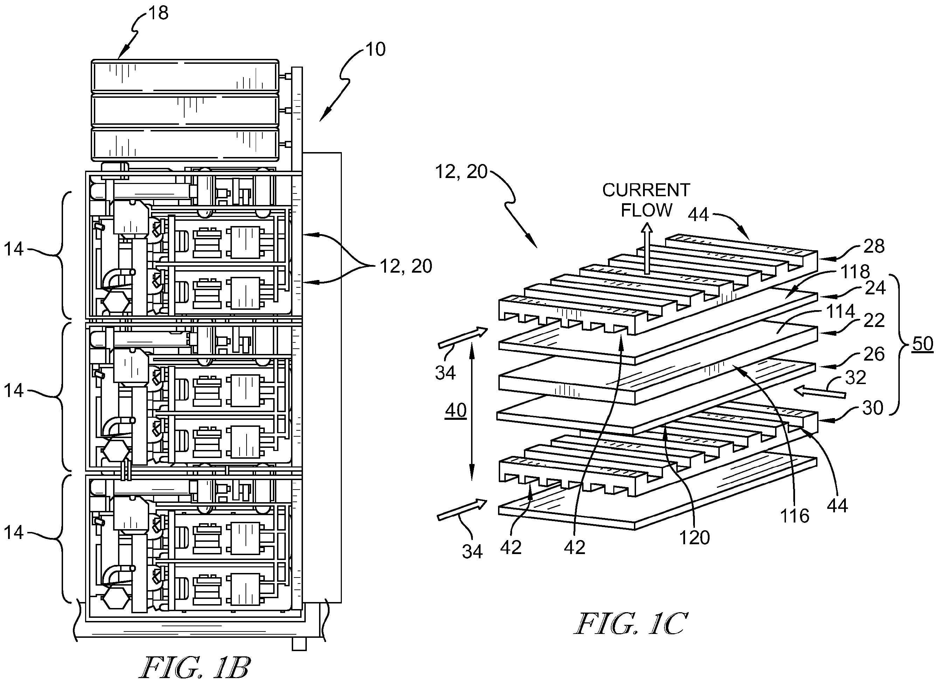

As shown in **FIG. 1A****,** fuel cell systems **10** often include one or more fuel cell stacks **12** or fuel cell modules **14** connected to a balance of plant (BOP) **16,** including various components, to support the electrochemical conversion, generation, and/or distribution of electrical power to help meet modern day industrial and commercial needs in an environmentally friendly way. As shown in **FIGS. 1B** and **1C****,** fuel cell systems **10** may include fuel cell stacks **12** comprising a plurality of individual fuel cells **20.** Each fuel cell stack **12** may house a plurality of fuel cells **20** assembled together in series and/or in parallel. The fuel cell system **10** may include one or more fuel cell modules **14** as shown in **FIGS. 1A** and **1B****.**

Each fuel cell module **14** may include a plurality of fuel cell stacks **12** and/or a plurality of fuel cells **20.** The fuel cell module **14** may also include a suitable combination of associated structural elements, mechanical systems, hardware, firmware, and/or software that is employed to support the function and operation of the fuel cell module **14.** Such items include, without limitation, piping, sensors, regulators, current collectors, seals and insulators.

The fuel cells **20** in the fuel cell stacks **12** may be stacked together to multiply and increase the voltage output of a single fuel cell stack **12.** The number of fuel cell stacks **12** in a fuel cell system **10** can vary depending on the amount of power required to operate the fuel cell system **10** and meet the power need of any load. The number of fuel cells **20** in a fuel cell stack **12** can vary depending on the amount of power required to operate the fuel cell system **10** including the fuel cell stacks **12.**

The number of fuel cells **20** in each fuel cell stack **12** or fuel cell system **10** can be any number. For example, the number of fuel cells **20** in each fuel cell stack **12** may range from about 100 fuel cells to about 1000 fuel cells, including any specific number or range of number of fuel cells **20** comprised therein (e.g., about 200 to about 800). In an embodiment, the fuel cell system **10** may include about 20 to about 1000 fuel cells stacks 12, including any specific number or range of number of fuel cell stacks **12** comprised therein (e.g., about 200 to about 800). The fuel cells **20** in the fuel cell stacks **12** within the fuel cell module **14** may be oriented in any direction to optimize the operational efficiency and functionality of the fuel cell system **10.**

The fuel cells **20** in the fuel cell stacks **12** may be any type of fuel cell **20.** The fuel cell **20** may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells **20** may be a polymer electrolyte membrane or proton exchange membrane (PEM) fuel cell or a solid oxide fuel cell (SOFC).

In an embodiment shown in **FIG. 1C**, the fuel cell stack **12** includes a plurality of proton exchange membrane (PEM) fuel cells **20.** Each fuel cell **20** includes a single membrane electrode assembly (MEA) **22** and a gas diffusion layers (GDL) **24, 26** on either or both sides of the membrane electrode assembly (MEA) **22** (see **FIG. 1C**). The fuel cell **20** further includes a bipolar plate (BPP) **28, 30** on the external side of each gas diffusion layers (GDL) **24**, **26**, as shown in **FIG. 1C****.** The above-mentioned components, in particular the bipolar plate **30**, the gas diffusion layer (GDL) **26**, the membrane electrode assembly (MEA) **22**, and the gas diffusion layer (GDL) **24** comprise a single repeating unit 50.

The bipolar plates (BPP) **28**, **30** are responsible for the transport of reactants, such as fuel **32** (e.g., hydrogen) or oxidant **34** (e.g., oxygen, air), and cooling fluid 36 (e.g., coolant and/or water) in a fuel cell **20.** The bipolar plates (BPP) **28**, **30** can uniformly distribute reactants **32**, **34** to an active area **40** of each fuel cell **20** through oxidant flow fields **42** and/or fuel flow fields **44** formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plate (BPP) 28, 30.

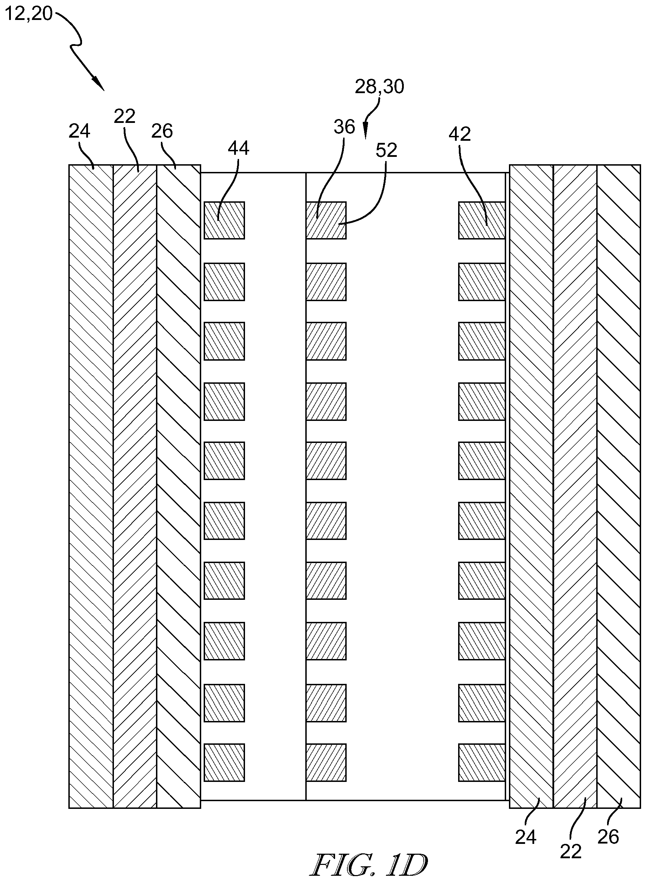

The bipolar plates (BPP) 28, 30 may each be formed to have reactant flow fields 42, 44 formed on opposing outer surfaces of the bipolar plate (BPP) 28, 30, and formed to have coolant flow fields **52** located within the bipolar plate (BPP) 28, 30, as shown in **FIG. 1D****.** For example, the bipolar plate (BPP) **28**, **30** can include fuel flow fields **44** for transfer of fuel **32** on one side of the plate **28**, **30** for interaction with the gas diffusion layer (GDL) **26**, and oxidant flow fields **42** for transfer of oxidant **34** on the second, opposite side of the plate 28, **30** for interaction with the gas diffusion layer (GDL) **24.** As shown in **FIG. 1D**, the bipolar plates (BPP) **28**, **30** can further include coolant flow fields **52** formed within the plate (BPP) **28**, **30**, generally centrally between the opposing outer surfaces of the plate (BPP) **28**, **30.** The coolant flow fields **52** facilitate the flow of cooling fluid 36 through the bipolar plate (BPP) **28**, **30** in order to regulate the temperature of the plate (BPP) **28**, **30** materials and the reactants. The bipolar plates (BPP) **28**, **30** are compressed against adjacent gas diffusion layers (GDL) **24**, **26** to isolate and/or seal one or more reactants **32**, **34** within their respective pathways **44**, **42** to maintain electrical conductivity, which is required for robust operation of the fuel cell **20** (see **FIGS. 1C** and **1D**).

The fuel cell system **10** described herein, may be used in stationary and/or immovable power system, such as industrial applications and power generation plants. The fuel cell system **10** may also be implemented in conjunction with an air delivery system **18.** Additionally, the fuel cell system **10** may also be implemented in conjunction with electrolyzers **19** and/or other electrolysis system **19.** In one embodiment, the fuel cell system **10** is connected and/or attached in series or parallel to an electrolysis system **19**, such as one or more electrolyzers **19** in the BOP **16** (see **FIG. 1A**). In another embodiment, the fuel cell system **10** is not connected and/or attached in series or parallel to an electrolysis system **19**, such as one or more electrolyzers **19** in the BOP **16.**

The present fuel cell system **10** may also be comprised in mobile applications. In an exemplary embodiment, the fuel cell system **10** is in a vehicle and/or a powertrain **100.** A vehicle **100** comprising the present fuel cell system **10** may be an automobile, a pass car, a bus, a truck, a train, a locomotive, an aircraft, a light duty vehicle, a medium duty vehicle, or a heavy-duty vehicle. Type of vehicles **100** can also include, but are not limited to commercial vehicles and engines, trains, trolleys, trams, planes, buses, ships, boats, and other known vehicles, as well as other machinery and/or manufacturing devices, equipment, installations, among others.

The present fuel cell system **10** may also be comprised in mobile applications. In an exemplary embodiment, the fuel cell system **10** is in a vehicle and/or a powertrain **100.** A vehicle **100** comprising the present fuel cell system **10** may be an automobile, a pass car, a bus, a truck, a train, a locomotive, an aircraft, a light duty vehicle, a medium duty vehicle, or a heavy-duty vehicle. Type of vehicles **100** can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain **100** may be used on roadways, highways, railways, airways, and/or waterways. The vehicle **100** may be used in applications including but not limited to off highway transit, bobtails, and/or mining equipment. For example, an exemplary embodiment of mining equipment vehicle **100** is a mining truck or a mine haul truck.

In addition, it may be appreciated by a person of ordinary skill in the art that the fuel cell system **10**, fuel cell stack **12**, and/or fuel cell **20** described in the present disclosure may be substituted for any electrochemical system, such as an electrolysis system (e.g., an electrolyzer), an electrolyzer stack, and/or an electrolyzer cell (EC), respectively. As such, in some embodiments, the features and aspects described and taught in the present disclosure regarding the fuel cell system **10**, stack **12**, or cell **20** also relate to an electrolyzer, an electrolyzer stack, and/or an electrolyzer cell (EC). In further embodiments, the features and aspects described or taught in the present disclosure do not relate, and are therefore distinguishable from, those of an electrolyzer, an electrolyzer stack, and/or an electrolyzer cell (EC).

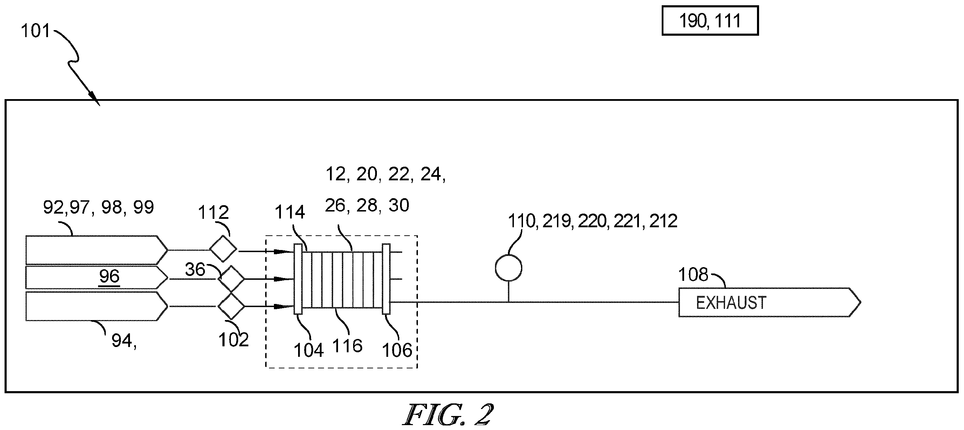

In one embodiment, as shown in **FIG. 2**, a fuel cell engine **101** may comprise a fuel cell stack **12** with fuel cells **20.** The fuel cell stack **12** may comprise an anode fuel system **92.** The anode fuel system **92** may comprise an anode gas stream **112** and a cathode air system **94** comprising a cathode air stream **102.** In some embodiments, the pressures and flow rates in the anode fuel system **92** may follow the pressures and flow rates in the cathode air system **94.**

The anode gas stream **112** may enter an anode **114** of the fuel cell stack **12.** The cathode air stream **102** may enter a cathode **116** at cathode inlet port **104** of the fuel cell stack **12** and exit at a cathode exhaust port **106** as a cathode exhaust **108**.

In one embodiment, the pressure differential between the reactant gasses (e.g., anode gas stream **112** and cathode air stream **102**) may need to be kept at a minimum. Minimum pressure allows the forces experienced by the MEA **22** and the GDL **24**, **26** of the fuel cell **20** to be decreased. The ongoing reaction between the fuel **32** (e.g., hydrogen) and the oxidant **34** in a fuel cell stack **12** may create water vapor in the exhaust stream of the fuel cell stack **12.** A relative humidity sensor **110** may be placed directly at the cathode exhaust port **106.**

Total relative humidity (i.e., 100% RH) represents the maximum amount of water vapor that the air can contain before water is thermodynamically favored to condense. Once the relative humidity in the cathode air stream **102** of the fuel cell stack **12** is about 100%, the reaction at the fuel cell stack **12** becomes increasingly difficult and results in the formation of liquid water.

There is a target relative humidity at the fuel cell stack **12** outlet for which fuel cell stack **12** operation may be optimized. The target relative humidity may be dependent on the fuel cell stack **12** operating conditions (e.g., current, pressure, temperature, etc.) and fuel cell stack design. There may be different targets for small versus large fuel cell stack **12** area, high versus low fuel cell aspect ratio, and/or for different channel lengths. Therefore, a control system **190** in a fuel cell engine **101** comprising a fuel cell stack **12** may determine a target relative humidity based on several factors.

Having the ability to target very high humidity content allows for a direct method of determining the fuel cell stack **12** saturation condition. About 100% relative humidity provides the mass balance to allow the maximum amount of product water to be transferred into the exhaust stream with no liquid blockage and with a high membrane saturation. This target may vary slightly, from about 90% to about 110%, as the benefits of either outlier may produce a favorable outcome.

A slightly dryer fuel cell stack **12** outlet may produce a very high average fuel cell oxygen supply, and low currents (where proton resistance is not a concern) may promote a longer cell life. A slightly wetter fuel cell stack **12** outlet allows for a more aggressive proton conductivity, which may promote high cell power density and be permissible for short durations.

In some embodiments, the relative humidity sensor **110** may be placed as close as feasibly possible to the outlet of the fuel cell stack **12** on the cathode side. In this location, a relative humidity reading determined by the relative humidity sensor **110** may be essentially equivalent to the relative humidity that the outlet side of the fuel cell stack **12** experiences. The relative humidity sensor **110** reading may be used to control air subsystems or cathode air systems **94** to reach a target relative humidity. The outlet relative humidity may be estimated by the operating state of the fuel cell stack **12.**

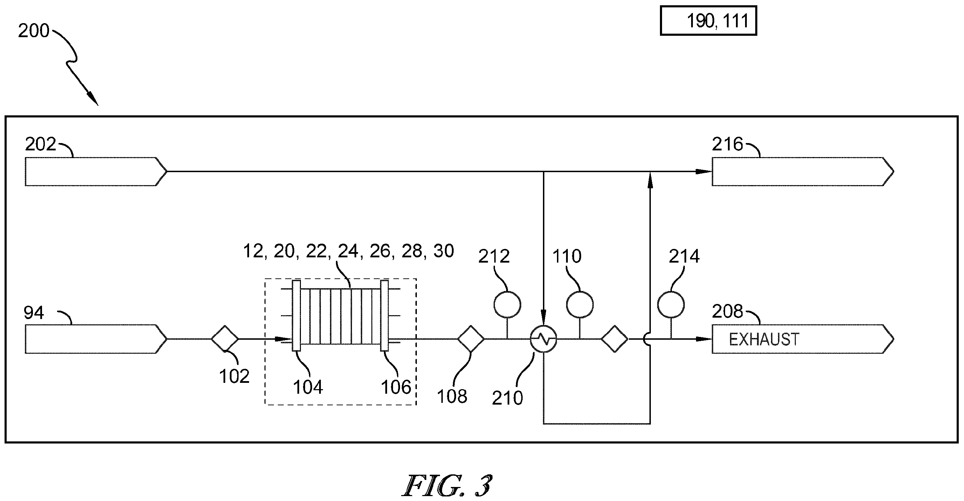

As shown in **FIG. 3****,** a fuel cell engine **200** comprises a fuel cell stack **12.** The relative humidity sensor **110** is placed downstream of a heat exchanger **210** at the cathode exhaust port **106.** The heat exchanger **210** is used to increase the temperature of the cathode exhaust **108** by a determined amount using temperature sensors **212, 214** upstream and downstream of the heat exchanger **210.**

The temperature of the cathode exhaust **108** may be increased based on the temperature of a coolant **216** from a coolant supply **202.** A shift in air temperature may decrease the relative humidity of the cathode exhaust **108** by a predictable percentage. In some embodiments, the shift in relative humidity may be used to introduce an offset from the actual relative humidity percentage of the cathode exhaust **108** from a conditioned heat exchanger exhaust air **208.**

When the relative humidity of the cathode exhaust **108** exceeds 100%, the liquid water that forms as a result of condensation may not be accounted for by the relative humidity sensor **110.** Cathode exhaust **108** with a relative humidity of greater than 100% may still be metered via offsetting the relative humidity by changing the air temperature. This may be done by measuring the outlet relative humidity from the heat exchanger **210** and applying the offset value to the measured value. For example, if the measured value is about 90% RH and the offset is about 20% RH, the relative humidity water content at cathode air exhaust **108** may be about 110% RH.

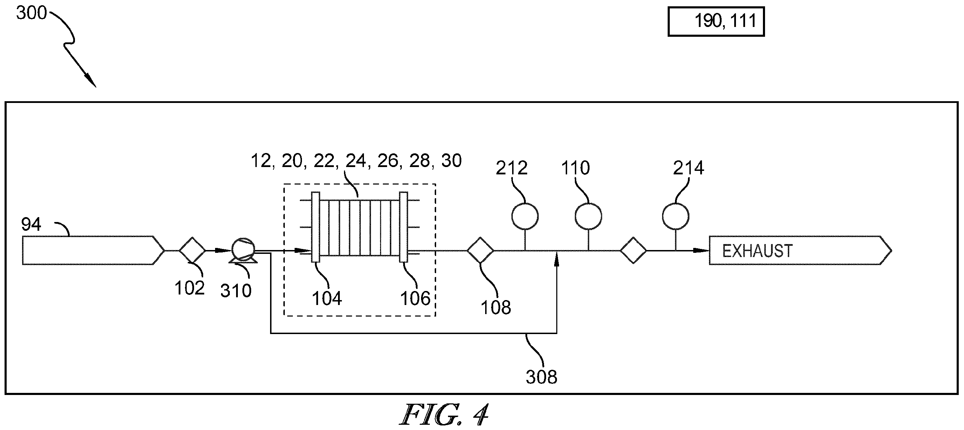

In one embodiment, as shown in **FIG. 4**, a fuel cell engine **300** may comprise a fuel cell stack **12** and fuel cells **20.** An available air bearing exhaust stream **308** of an air compressor **310** utilized in high pressure air systems may be used. The air bearing exhaust stream **308** may comprise of conditioned air with a low relative humidity. The air bearing exhaust stream **308** air may be introduced upstream of the relative humidity sensor **110** and may dilute the cathode exhaust stream **108.** This dilution may be predicted based on the pressure ratio of the compressor **310** and may introduce a relative humidity offset proportional to the dilution ratio of the air bearing exhaust stream **308** to the cathode exhaust **108.**

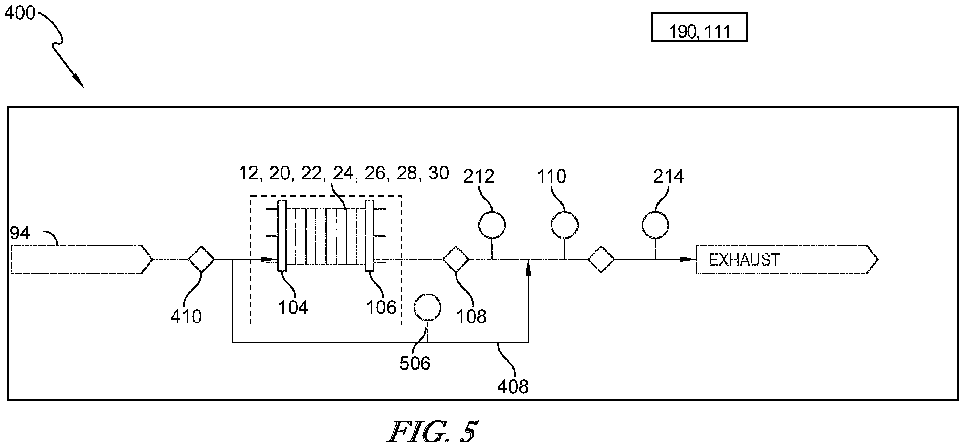

In one embodiment, as shown in **FIG. 5**, a fuel cell engine **400** may comprised a fuel cell stack **12** and fuel cells **20.** Conditioned process air **410** in a bypass air stream **408** of the cathode air system **94** may be used in the fuel cell engine **400**, and the bypass air stream **408** may be introduced upstream of the relative humidity sensor **110** to dilute the cathode exhaust stream **108.**

In some embodiments, a virtual relative humidity sensor **111** may be used in conjunction with or as an alternative to the relative humidity sensor **110.** The virtual relative humidity sensor **111** may be located in a computer system or controller on or configured to be connected to the fuel cell stack **12.** The virtual relative humidity sensor **111** may be a sensor separate from, not connected, and/or indirectly connected to a fuel cell stack **12.**

The virtual relative humidity sensor **111** may be controlled by a user or an operator, such as manually. The virtual relative humidity sensor **111** may also be controlled automatically, electronically, or in real-time. In some embodiments, the virtual relative humidity sensor **111** may be implemented based on mathematical modelling or computer or mathematical algorithms contained by a processor of any such controller or a computing device.

For example, the operating pressure, temperature, fuel cell stack **12** inlet air mass flow, and/or the electrical current generated by the fuel cell stack **12** may be measured. The virtual relative humidity sensor **111** may use the measurements as input. The target values for fuel cell stack **12** operation may be adjusted such that a target relative humidity is achieved. In some embodiments, the use of the virtual relative humidity sensor **111** may be supplemental to a map based approach.

In one embodiment, the relative humidity sensor **110** may be used in combination with the virtual relative humidity sensor for diagnostic purposes. For example, the operating state of the fuel cell stack **12** may be used to estimate an expected relative humidity at the cathode exhaust port **106.** This expected value may be compared to the actual relative humidity at the cathode exhaust port **106.**

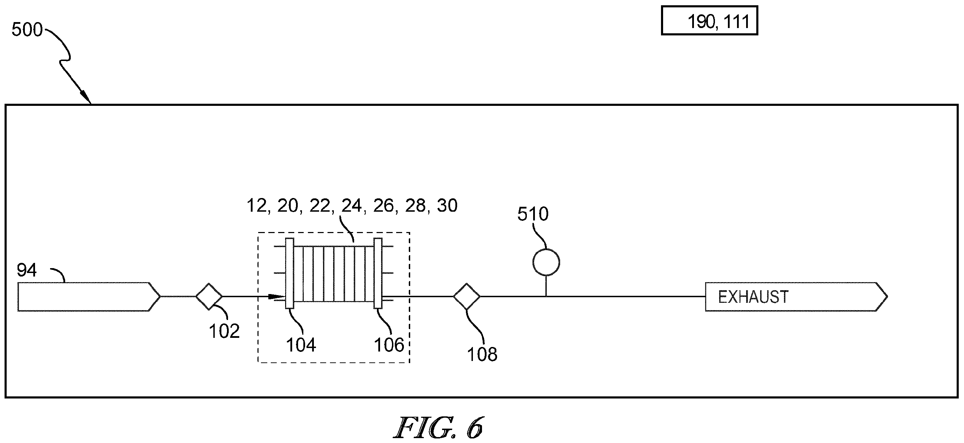

In one embodiment, as shown in **FIG. 6**, a fuel cell engine **500** may comprised a fuel cell stack **12** and fuel cells **20.** A wide range lambda sensor or an O₂ sensor **510** may be used instead of the relative humidity sensor **110**, and the wide range lambda sensor **510** may determine a measurement of the oxygen concentration in the cathode exhaust stream **108.**

Since the excess air ratio is predetermined for different operating points of the fuel cell stack **12**, the oxygen concentration measurements may be compared to the excess air ratio to determine whether the reaction is occurring at the expected rate. If the oxygen concentration exceeds the expected oxygen concentration, then the reaction at the fuel cell stack **12** may be less than expected. The cathode air system **94** parameters such as pressure and/or mass flow may be manipulated based on the oxygen sensor readings and a target oxygen concentration to maintain the reactions in the fuel cell stack **12** at an optimal rate.

Internal combustion engines use a lambda sensor or an oxygen sensor to measure the actual air-fuel ratio during combustion. While no or very little combustion generally occurs in a fuel cell stack **12**, a wide-range lambda sensor **510** may be used to determine the ratio of reactants during the reaction in a fuel cell stack **12** and to control the fuel cell stack **12** operation. A lambda sensor **510** may be used instead of or as an alternative to one or more switching sensors.

These switching sensors typically provide digital output at a nominal excess air ratio (λ__{AIR}) of about 1.0 if the fuel cell stack **12** operates at an excess air ratio (λ__{AIR}) greater than about 1.5. The control system **190** can meter the relative humidity of the cathode exhaust **108** and control the fuel cell stack **12** operation so as to ensure the target relative humidity is achieved. The control system **190** may also self-tune each fuel cell engine **500** for optimal operation.

If there are significant discrepancies, diagnostic methods may be used to assess the causes of the discrepancy. In some embodiments, the diagnostic methods may comprise a pressure sensor **219**, a temperature sensor **212, 214,** a mass flow sensor **221**, and/or a relative humidity sensor **110.** In other embodiments, as shown in **FIG. 5**, the diagnostic methods may comprise a sensor **560** to determine any air leak in the by-pass stream or elsewhere in the fuel cell stack **12.**

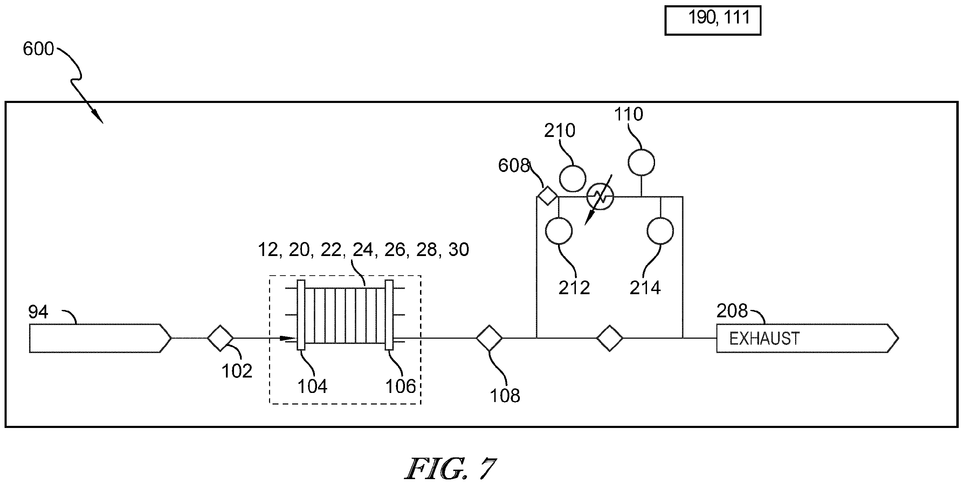

In one embodiment, as shown in **FIG. 7**, a fuel cell engine **600** may comprise a separate cathode exhaust line or a relative humidity bypass line **608** dedicated for relative humidity sensing. In some embodiments, the separate cathode line or the relative humidity bypass line **608** may be configured parallel to the usual cathode exhaust **108.** In other embodiments, the separate cathode line or the relative humidity bypass line **608** may be used to isolate the relative humidity sensor **110.** In some embodiments, a heater **210** (e.g., resistance heater) may be used to change (e.g., increase or decrease) the temperature of the air by a set amount within the separate cathode line or a relative humidity bypass line **608.**

The change in temperature may decrease the relative humidity by a predictable percentage at the relative humidity sensor **110.** In some embodiments, the change in temperature may be calculated based on constant water presence and/or changing temperature of air. This shift in relative humidity may be used to subject the relative humidity sensor **110** to readings below the upper limit of the relative humidity sensor **110,** which is typically about 100% relative humidity when the actual cathode relative humidity exceeds 100%. In some embodiments, the measured relative humidity may be shifted to be within of a highest accuracy band the relative humidity sensor **110.**

As shown in **FIG. 2****,** the fuel cell stack **12** may be supported by the fuel handling subsystem or anode fuel system **92,** the air handling subsystem or cathode air system **94,** and/or a coolant subsystem **96.** These components of the fuel cell stack **12** enable electrochemical reactions and/or determine fuel cell stack **12** operation. Several factors such as excess fuel ratio, fuel pressure, recirculated flow rate, and/or anode-cathode pressure differential may be considered by the fuel handling subsystem or anode fuel system **92** to enable the fuel cell stack operation.

As shown in **FIG. 2****,** the anode fuel system **92** may be supplied by a pressurized storage vehicle or vessel **97.** Pressure control of that storage vessel **97** may be used as the main control mechanism for the anode fuel system **92.** In some embodiments, the anode gas stream **112** may form a re-circulatory loop in which the anode gas may be continuously contained within the anode fuel system **92.** This is the case unless the fuel **32** is consumed during electrochemical reactions or removed by auxiliary purge events. In other embodiments, a fuel recirculation blower **99** may be employed to facilitate the recirculation of the anode gas stream **112.**

In one embodiment, the cathode air system **94** may operate with an excess air ratio and the anode fuel system **92** may operate with an excess fuel ratio. A function of the anode fuel system **92** may be to ensure that the pressure of the anode gas stream **122** is such that the pressure differential between the anode **114** and the cathode **116** ranges from about 30 kPa to about 45 kPa, including any specific pressure differential or range comprised therein. Additionally, or alternatively, a function of the anode fuel system **92** may be to ensure that the flow rate of the anode gas stream **122** or fuel supplied and recirculated is adequate for the reaction rate of the electrochemical reactions and the required excess fuel ratio.

In some embodiments, water may accumulate in the anode recirculation path during the electrochemical reactions. The accumulated water may be discharged during a purge process in which the anode recirculation loop may be temporarily vented to atmosphere. The purge duty cycles may comprise about 0.5% to about 1% of the flow, from about 1% to about 3% of the flow, or from about 3% to about 5% of the flow, including any specific percentage or range comprised in any of such ranges. The purge duty cycles may have minimal impact on the operating conditions of the fuel cell stack.

In one embodiment, active control of one or more subsystems, the fuel handling subsystem or anode fuel system **92**, the air handling subsystem or cathode air system **94,** and/or the coolant subsystem **96** may be needed for effective and efficient operation of the fuel cell engine **101, 200, 300, 400, 500, 600.** In some embodiments, the design of the fuel cell stack **12**, the specific selection of the MEA **22**, and/or the age of the fuel cell stack **12** may be critical for effective and efficient operation of the fuel cell engine **101, 200, 300, 400, 500, 600.** In other embodiments, the operating conditions of the fuel cell stack **12**, such as mass flow, pressure, temperature, electrical load may be critical for effective and efficient operation of the fuel cell engine **101, 200, 300, 400, 500, 600.**

Methods to determine optimal fuel cell stack **12** operation may use predetermined maps and may not directly account for the amount of water vapor in the exhaust stream or cathode exhaust **108** of the fuel cell stack **12.**

A method to control and/or determine the optimal operation of a fuel cell engine **101, 200, 300, 400, 500, 600** or fuel cell stack **12** may comprise the control system **190** using control algorithms to control the fuel cell stack **12.** The control algorithms may include the reaction rate of the fuel cell stack **12.** The reaction rate may be controlled by controlling the mass flow and pressure of cathode air stream **102**, the temperature of the fuel cell stack coolant **36**, and/or the electrical outputs of the fuel cell stack **12** (e.g., current and voltage). In some other embodiments, the integral of the reaction rate of the electrochemical reactions in the fuel cell stack **12** may comprise the current generated by the fuel cell stack **12** minus any parasitic reactions. Alternatively, the parasitic reactions in the fuel cell stack **12** may be minimal.

The method to control and/or determine the optimal operation of a fuel cell engine **101, 200, 300, 400, 500, 600** or fuel cell stack **12** may comprise the control system **190** using pre-determined lookup tables or maps based on variables such as pressure, temperature, and/or air flow. The pre-determined lookup tables or maps may be based on experimentally optimized conditions used to establish feedforward targets. The pre-determined lookup tables or maps may be based on experimental tuning. The pre-determined lookup tables or maps may be used to predictively react to changing load conditions to optimize fuel cell stack **12** performance and durability. Pre-determined lookup tables or maps may be calibrated based on test data obtained by varying pressure, temperature, and/or air flow.

The method to control and/or determine the optimal operation of a fuel cell engine **101, 200, 300, 400, 500, 600** may be based on tuning the fuel cell stack **12** comprised in the fuel cell engine **101** to maximize fuel cell stack **12** output power during testing. Methods to control and/or determine the optimal operation of a fuel cell engine **101, 200, 300, 400, 500, 600** may comprise the control system **190** directly controlling one or more fuel cell stack **12** operating states such as steady state power output, transient power output, fuel cell stack startup, fuel cell stack shutdown, and/or fuel cell stack recovery. Methods to control and/or determine the optimal operation of a fuel cell engine **101, 200, 300, 400, 500, 600** may be implemented to prevent fuel cell stack **12** reversal and/or permanent damage.

One or more subsystems supporting the fuel cell stack **12** such as the coolant subsystem **96** and/or any auxiliary subsystems **92**, **94**, may act in response to the cathode air system **94** and/or anode fuel system **92.** In some embodiments, one or more subsystems supporting the fuel cell stack **12**, such as the coolant subsystem **96** and/or any auxiliary subsystems **92**, **94**, may not typically take precedence in any fuel cell engine control algorithms. The coolant system **96** may control the temperature of the fuel cell stack **12.** In some further embodiments, a charge air cooler **98** may be used to condition the cathode air to a temperature approximating the fuel cell stack coolant temperature, and/or may enable the cathode air to operate above or below the fuel cell stack coolant temperature.

The method to control and/or determine the optimal operation of a fuel cell engine **101, 200, 300, 400, 500, 600** or fuel cell stack **12** may comprise the control system **190** implementing an algorithm focused on pressure control. Pressure of the cathode air system **94** may be adjusted to increase or decrease the water content in the cathode exhaust **108.** Relative humidity may be used to measure this water content. Water concentration may be directly measured or may be estimated based on oxygen or nitrogen measurements in the cathode exhaust **108.**

The target relative humidity in the cathode exhaust **108**, mass flow, and/or target temperature of cathode air system **94** may be determined by current density of the fuel cell stack **12.** In some embodiments, the target relative humidity in the cathode exhaust **108**, mass flow, and/or target temperature of cathode air system **94** may be determined by using pre-determined lookup tables or maps.

The method to control and/or determine the optimal operation of a fuel cell engine **101, 200, 300, 400, 500, 600** or fuel cell stack **12** may comprise the control system **190** implementing an algorithm focused on mass flow control. The mass flow of the cathode air system **94** may be adjusted to compensate for current demand, changing excess air ratio, and/or fuel cell stack outlet humidity. In some embodiments, excess air ratio may be increased or decreased by the control system **190.**

Increasing the excess air ratio may increase the oxygen or oxidant concentration at the reaction sites because less of the overall oxygen or oxidant may be consumed during the reaction. Increasing the excess air ratio may increase the reaction at the reaction site and/or decrease relative humidity in the cathode exhaust **108.** In some embodiments, the pressure and temperature of the cathode air system **94** may be determined by using pre-determined lookup tables or maps based on current density of the fuel cell stack **12.**

The method to control and/or determine the optimal operation of a fuel cell engine **101, 200, 300, 400, 500, 600** or fuel cell stack **12** may comprise the control system implementing temperature control. The temperature of the fuel cell stack coolant **36** and/or an intake charge air cooler coolant may be regulated in the coolant subsystem **96.** Changing the temperature of the cathode air system **94** may change the ability of the cathode air system **94** to hold water vapor, and thus alter the relative humidity in the cathode exhaust **108.** In some embodiments, the pressure and mass flow of the cathode air system **94** may be determined by using pre-determined lookup tables or maps based on current density of the fuel cell stack **12.**

The method to control and/or determine the optimal operation of a fuel cell engine **101, 200, 300, 400, 500, 600** or fuel cell stack **12** may be implemented by using a sensor. In some embodiments, the sensor may be any type of sensor **212, 214, 210, 219, 221** (e.g., temperature, pressure, current, voltage, flow, etc.). In some exemplary embodiments, the sensor is a relative humidity sensor **210.** In other embodiments, a sensor may be used to directly measure the water concentration in the cathode exhaust or may be estimated based on oxygen or nitrogen measurements in the cathode exhaust **108.**

In one embodiment, the relative humidity sensor **110** may be used to operate the fuel cell stack **12** with about 100% relative humidity in the cathode exhaust **108.** In some embodiments, the relative humidity sensor **110** may not detect instances when the actual amount of water in the cathode exhaust **108** exceeds about 100%. In some embodiments, to verify that the fuel cell stack **12** is operating with about 100% relative humidity in the cathode exhaust **108**, the fuel cell engine **101**, **200, 300, 400, 500, 600** may be perturbed by decreasing the cathode pressure by a pre-determined amount. Decreasing the cathode pressure by a pre-determined amount may have a pre-determined impact on the relative humidity in the cathode exhaust **108.**

The perturbation may result in a measured change in the relative humidity in the cathode exhaust **108.** The actual relative humidity percentage in the cathode exhaust **108** may be compared to the expected relative humidity percentage in the cathode exhaust **108.** If the expected and the actual relative humidity percentages in the cathode exhaust **108** are equal, then the operation of the fuel cell stack **12** may be determined to be at about 100% relative humidity prior to perturbation. If the actual relative humidity percentage in the cathode exhaust **108** is greater than the expected relative humidity percentage, the fuel cell stack **12** may be determined to be operating at greater than about 100% relative humidity.

If the fuel cell stack **12** is operating at greater than about 100% relative humidity, water condensation may occur. However, the water vapor content cannot exceed 100% relative humidity before condensed liquid water is thermodynamically favored. Thus, it may be assumed that condensation will generally occur.

Water in a condensed form is thermodynamically favored when water partial pressure is greater than the saturation pressure. Kinetics may play a role in determining liquid-vapor water split. For example, the cathode air stream **102** may be in a super-saturated state (i.e., the relative humidity may be greater than about 100%) if a rate of condensation is relatively slow.

The difference between the expected and actual relative humidity percentages in the cathode exhaust **108** may be used to offset or alter the operation of the cathode air system **94.** This difference may also be used to ensure that the operation of the fuel cell stack **12** occurs at about 100% relative humidity. The perturbed humidity measurements may be conducted at regular intervals to ensure accurate metering of the relative humidity in the cathode exhaust.

The target relative humidity in the cathode exhaust **108** may be determined and/or adjusted by implementing different methods. A method to determine the target relative humidity in the cathode exhaust **108** may comprise a controller balancing the short term and the long term requirements of the fuel cell stack **12** as input from a user (e.g., operator, customer etc.). The balance between the short term and the long term requirements of the fuel cell stack 12 may comprise evaluating immediate fuel cell stack **12** performance and long term fuel cell stack **12** durability.

Lower relative humidity values of about 90% or ranging from about 90% to about 120%, including any specific or range of relative humidity described therein, in the cathode exhaust **108** may support long term operation of the fuel cell stack **12.** In this state of operation, the reduced chance of flooding may result in a higher likelihood of reactant presence at the reaction site further resulting in a decreased chance of fuel cell stack **12** starvation and/or subsequent fuel cell stack **12** damage. Higher relative humidity values of about 110% in the cathode exhaust may increase the likelihood of increased membrane proton conduction, which may increase the overall performance of the fuel cell stack **12.**

An increase in hydration in, at, or near the fuel cell stack **12** may increase local flooding, especially towards the cathode exhaust. The local flooding may cause local starvation, and therefore local degradation. Local degradation may not impact immediate performance of the fuel cell stack **12,** but may negatively affect long-term aging of the fuel cell stack **12.**

In one embodiment, the primary variables for humidity control may include flow rate, pressure, and/or temperature. As the fuel cell stack **12** ages, and the effectiveness of a catalyst used in the fuel cell stack **12** decreases, it may be advantageous to increase the excess air ratio to achieve the rated current. This modification may also affect the other two variables (i.e., the pressure and temperature) as they are intrinsically related to the determination of the required relative humidity.

Implementation of a method for monitoring and/or controlling the cathode exit humidity may be important when the inlet moisture content is variable. Monitoring and/or controlling the exit humidity may be important in mobility applications when the atmosphere becomes very hot and humid, and/or the fuel cell engine is equipped with a humidification system. Humidification systems are widely used in fuel cell stack **12** applications for a variety of reasons, including for cell stability and/or to achieve a high-power density. Cost, complexity, and potential for failure promote non-humidified fuel cell architectures at the cost of a decrease in power density.

The relative humidity sensor **110** monitoring the relative humidity at the cathode exhaust **108** of a fuel cell stack **12** may ensure that the cathode inlet port **104** is not over saturating and subsequently flooding the cathode outlet or cathode exhaust port **106.** The benefits of a humidified system comprising humidifying the cathode air stream **102** may include increasing power density and minimizing membrane drying effects. Additional benefits of a humidified system include reducing cathode inlet losses associated with overly dry air or high cathode stoichiometry ratio.

The relative humidity sensor **110** monitoring the relative humidity at the cathode exhaust of a fuel cell stack may allow the fuel cell stack **12** operation to benefit from the humidified system while monitoring the outlet conditions (i.e., avoiding flooding and any premature aging affects caused by excess humidity). Using relative humidity metering at the cathode exhaust of a fuel cell stack may optimize fuel cell stack **12** operation in a closed loop manner.

The present method may be used to accurately determine a relative humidity reading when the relative humidity is greater than about 100% at the fuel cell stack outlet **108.** In some embodiments, the method may comprise enthalpically decreasing the pressure upstream of the relative humidity sensor **110.** In one embodiment, as shown in **FIG. 7****,** a fuel cell engine **600** may comprise a fuel cell stack **12**, the relative humidity sensor **110**, and a heat exchanger **210.** By decreasing the total pressure of the exhaust mixture **208** without removing any energy from the stream, this disclosed method may allow for a decrease in relative humidity as the state will shift closer to the vapor phase.

The following described aspects of the present invention are contemplated and non-limiting:

A first aspect of the present invention relates to a fuel cell system (also referred to as a fuel cell stack system). The fuel cell system includes an anode and a cathode, a cathode inlet port, a cathode exhaust port, a cathode inlet air stream, and a cathode exhaust steam. The fuel cell system also includes a sensor in the cathode exhaust stream for detecting, measuring, and/or determining a water content reading in the cathode exhaust stream and a controller for determining the operation of the fuel cell stack based on the water content reading.

A second aspect of the present invention relates to a fuel cell system. The fuel cell system includes a fuel cell stack including an anode, a cathode, a cathode inlet port, a cathode exhaust port, a cathode inlet air stream, and a cathode exhaust stream. The fuel cell system further includes a wide range lambda sensor in the cathode exhaust stream for detecting, determining, and/or measuring a measured oxygen concentration of the cathode exhaust stream and a controller for determining the operation of the fuel cell stack based on the measured oxygen concentration and a target oxygen concentration.

In a third aspect of the present disclosure, a method of operating a fuel cell system includes the steps of determining a target water content or a target relative humidity of a the cathode exhaust stream based on the current density of the fuel cell stack, using or utilizing a first sensor to determine a water content of the cathode exhaust stream, and adjusting the cathode system by implementing a controller to increase or decrease the determined water content of the cathode exhaust stream based on the target water content or the target relative humidity of the cathode exhaust stream.

In some embodiments, the first sensor may be relative humidity sensor, and the method may further include detecting a relative humidity reading with the relative humidity sensor. In some embodiments, adjusting the cathode system may further include determining a target pressure, or a target temperature of a cathode exhaust stream based on the current density of the fuel cell stack, utilizing a second sensor to measure a current pressure or a current temperature in the cathode exhaust stream, changing the current pressure based on the target pressure in the cathode exhaust stream, changing the current temperature in the cathode exhaust stream based on the target temperature, changing a mass flow in the cathode system, or changing a temperature of the cathode exhaust stream.

In the first and/or second aspect of the present invention, the sensor may be a relative humidity sensor and the water content reading may be a relative humidity reading including a water vapor content reading in the cathode exhaust stream. In the first and/or second aspect of the present invention, the controller may use a closed loop optimization of the fuel cell stack based on the relative humidity reading when determining the operation of the fuel cell stack.

In the first and/or second aspect of the present invention, the cathode inlet air stream may be humidified.

In the first and/or second aspect of the present invention, the system may further include an air compressor. The air compressor may provide a conditioned air upstream of the relative humidity sensor and dilute the cathode exhaust steam. Dilution of the cathode exhaust stream may be based on a pressure ratio of the air compressor. Dilution of the cathode exhaust stream may introduce a relative humidity offset proportional to a dilution ratio of the conditioned air to the cathode outlet exhaust. In the first and/or second aspect of the present invention, the conditioned air may be introduced upstream of the relative humidity sensor.

In the first and/or second aspect of the present invention, the relative humidity sensor may be a virtual relative humidity sensor. In the first and/or second aspect of the present invention, a bypass air stream may be introduced upstream of the relative humidity sensor to dilute the cathode exhaust stream. In the first and/or second aspect of the present invention, the relative humidity sensor may be located on a separate cathode exhaust line comprising a heater. The heater may increase the temperature of air in the separate cathode exhaust line by a set amount.

In the first and/or second aspect of the present invention, the sensor may determine the water content in the cathode exhaust stream based on the measurement of oxygen and nitrogen in the cathode exhaust stream.

In the third aspect of the present invention, the sensor may be relative humidity sensor, and the method may further include detecting a relative humidity reading with the relative humidity sensor. In the third aspect of the present invention, adjusting the cathode system may further include adjusting a pressure in the cathode exhaust stream, a mass flow in the cathode system or a temperature of the cathode exhaust stream.

In the third aspect of the present invention, the method may include perturbing the system to cause a change in the water content reading by the sensor in the cathode exhaust stream, comparing the change in the water content reading to an expected in water content reading in the cathode exhaust stream due to the perturbation. If the change in the water content reading in the cathode exhaust stream is greater than the expected water content reading in the cathode exhaust stream, the fuel cell stack and/or system may be determined to be operating at greater than about 100% relative humidity. In the third aspect of the present invention, the difference between the change in the water content reading in the cathode exhaust stream and the expected water content reading in the cathode exhaust stream may be used to offset the operation of the fuel cell stack and/or system in order to ensure that the fuel cell stack and/or system is operating at about 100% relative humidity.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims.

## Claims

1. A fuel cell system comprising:
a fuel cell stack including an anode and a cathode, a cathode inlet port, a cathode exhaust port, a cathode inlet air stream, and a cathode exhaust stream,
a heat exchanger located downstream of the cathode exhaust port,
a sensor positioned downstream of the heat exchanger for detecting a water content reading of the cathode exhaust stream, and
a controller for determining the operation of the fuel cell stack based on the water content reading,
wherein the heat exchanger is configured to increase a temperature of the cathode exhaust stream and to decrease the water content of the cathode exhaust stream.

2. The fuel cell system of claim 1, wherein the sensor is a relative humidity sensor and the water content reading is a relative humidity reading comprising a water vapor content reading in the cathode exhaust stream.

3. The fuel cell system of claim 2, wherein the controller uses a closed loop optimization of the fuel cell stack based on the relative humidity reading when determining the operation of the fuel cell stack.

4. The fuel cell system of claim 2, wherein the relative humidity sensor is located at the cathode exhaust port.

5. The fuel cell system of claim 2, further comprising a first temperature sensor positioned upstream of the heat exchanger and a second temperature sensor positioned downstream of the heat exchanger, wherein the heat exchanger is configured to increase the cathode exhaust stream temperature based on the first and second temperature sensors.

6. The fuel cell system of claim 2, further comprising an air compressor, wherein the air compressor is configured to provide a conditioned air upstream of the relative humidity sensor and dilute the cathode exhaust stream, wherein the air compressor is configured to dilute the cathode exhaust stream based on a pressure ratio of the air compressor.

7. The fuel cell system of claim 6, wherein the conditioned air is introduced upstream of the relative humidity sensor.

8. The fuel cell system of claim 2, wherein a bypass air stream is introduced upstream of the relative humidity sensor to dilute the cathode exhaust stream.

9. The fuel cell system of claim 2, wherein the relative humidity sensor is located on a separate cathode exhaust line comprising a heater, and wherein the heater increases the temperature of air in the separate cathode exhaust line by a set amount.

10. The fuel cell system of claim 1, wherein the system further comprises
a wide range lambda sensor in the cathode exhaust stream configured for detecting an oxygen concentration of the cathode exhaust stream.

11. A method of operating a fuel cell stack comprising:
determining a target water content or a target relative humidity of the cathode exhaust stream based on the current density of the fuel cell stack,
increasing a temperature of the cathode exhaust stream and decreasing a water content of the cathode exhaust stream by implementing a heat exchanger downstream of a cathode exhaust port, wherein the heat exchanger is enthalpically decreasing the pressure upstream of the relative humidity sensor, and
utilizing a first sensor to measure the water content of the cathode exhaust stream, and
adjusting the cathode system by implementing a controller to increase or decrease the measured water content of the cathode exhaust stream based on the target water content or the target relative humidity of the cathode exhaust stream.

12. The method of claim 11, wherein the first sensor is a relative humidity sensor and the method further comprises detecting a relative humidity reading with the relative humidity sensor.

13. The method of claim 11, wherein adjusting the cathode system further comprises determining a target pressure or a target temperature of a cathode exhaust stream based on the current density of the fuel cell stack, utilizing a second sensor to measure a current pressure or a current temperature in the cathode exhaust stream, changing the current pressure based on the target pressure in the cathode exhaust stream, changing the current temperature in the cathode exhaust stream based on the target temperature, changing a mass flow in the cathode system, or changing a temperature of the cathode exhaust stream.

14. The method of claim 11, further comprising perturbing the system to cause a change in the water content reading by the first sensor in the cathode exhaust stream, comparing the change in the water content reading to an expected water content reading in the cathode exhaust stream due to the perturbation, wherein if the change in the water content reading in the cathode exhaust stream is greater than the expected water content reading in the cathode exhaust stream, the fuel cell stack is determined to be operating at greater than about 100% relative humidity.

15. The method of claim 14, further comprising utilizing the difference between the change in the water content reading in the cathode exhaust stream and the expected water content reading in the cathode exhaust stream to offset the operation of the fuel cell stack in order to ensure that the fuel cell stack is operating at about 100% relative humidity.

## Patentansprüche

1. Brennstoffzellensystem, Folgendes umfassend:
einen Brennstoffzellenstapel, der eine Anode und eine Kathode, eine Kathodeneinlassöffnung, eine Kathodenabgasöffnung, einen Kathodeneinlassluftstrom und einen Kathodenabgasstrom einschließt,
einen Wärmetauscher, der stromabwärts von der Kathodenabgasöffnung angeordnet ist,
einen stromabwärts vom Wärmetauscher positionierten Sensor zum Ermitteln eines Wassergehalt-Messwerts des Kathodenabgasstroms, und
eine Steuerungseinrichtung zum Bestimmen des Betriebs des Brennstoffzellenstapels auf der Grundlage des Wassergehalt-Messwerts,
wobei der Wärmetauscher dafür konfiguriert ist, eine Temperatur des Kathodenabgasstroms zu erhöhen und den Wassergehalt des Kathodenabgasstroms zu verringern.

2. Brennstoffzellensystem nach Anspruch 1, wobei der Sensor ein Sensor für die relative Feuchtigkeit ist und der Wassergehalt-Messwert ein Messwert der relativen Feuchtigkeit ist, der einen Messwert des Wasserdampfgehalts im Kathodenabgasstrom umfasst.

3. Brennstoffzellensystem nach Anspruch 2, wobei die Steuerungseinrichtung eine Optimierung des Brennstoffzellenstapels im geschlossenen Regelkreis auf der Grundlage des Messwerts der relativen Feuchtigkeit verwendet, wenn sie den Betrieb des Brennstoffzellenstapels bestimmt.

4. Brennstoffzellensystem nach Anspruch 2, wobei der Sensor für die relative Feuchtigkeit an der Kathodenabgasöffnung angeordnet ist.

5. Brennstoffzellensystem nach Anspruch 2, ferner umfassend einen ersten Temperatursensor, der stromaufwärts vom Wärmetauscher positioniert ist, und einen zweiten Temperatursensor, der stromabwärts vom Wärmetauscher positioniert ist, wobei der Wärmetauscher dafür konfiguriert ist, die Temperatur des Kathodenabgasstroms auf der Grundlage des ersten und des zweiten Temperatursensors zu erhöhen.

6. Brennstoffzellensystem nach Anspruch 2, ferner einen Luftkompressor umfassend, wobei der Luftkompressor dafür konfiguriert ist, stromaufwärts vom Sensor für die relative Feuchtigkeit klimatisierte Luft bereitzustellen und den Kathodenabgasstrom zu verdünnen, wobei der Luftkompressor dafür konfiguriert ist, den Kathodenabgasstrom auf der Grundlage eines Druckverhältnisses des Luftkompressors zu verdünnen.

7. Brennstoffzellensystem nach Anspruch 6, wobei die klimatisierte Luft stromaufwärts vom Sensor für die relative Feuchtigkeit eingeleitet wird.

8. Brennstoffzellensystem nach Anspruch 2, wobei stromaufwärts vom Sensor für die relative Feuchtigkeit ein Bypass-Luftstrom eingeleitet wird, um den Kathodenabgasstrom zu verdünnen.

9. Brennstoffzellensystem nach Anspruch 2, wobei der Sensor für die relative Feuchtigkeit an einer separaten Kathodenabgasleitung angeordnet ist, die ein Heizelement umfasst, und wobei das Heizelement die Lufttemperatur in der separaten Kathodenabgasleitung um einen festgelegten Betrag erhöht.

10. Brennstoffzellensystem nach Anspruch 1, wobei das System ferner eine Lambdasonde mit breitem Bereich im Kathodenabgasstrom umfasst, die zum Ermitteln einer Sauerstoffkonzentration des Kathodenabgasstroms konfiguriert ist.

11. Verfahren zum Betreiben eines Brennstoffzellenstapels, Folgendes umfassend:
Bestimmen eines Zielwassergehalts oder eine relative Zielfeuchtigkeit des Kathodenabgasstroms auf der Grundlage der Stromdichte des Brennstoffzellenstapels,
Erhöhen einer Temperatur des Kathodenabgasstroms und Verringern eines Wassergehalts des Kathodenabgasstroms durch Implementieren eines Wärmetauschers stromabwärts von einer Kathodenabgasöffnung, wobei der Wärmetauscher den Druck stromaufwärts vom Sensor für die relative Feuchtigkeit enthalpisch verringert, und
Verwenden eines ersten Sensors, um den Wassergehalt des Kathodenabgasstroms zu messen, und
Nachregeln des Kathodensystems durch Implementieren einer Steuerungseinrichtung, um den gemessenen Wassergehalt des Kathodenabgasstroms auf der Grundlage des Zielwassergehalts oder der relativen Zielfeuchtigkeit des Kathodenabgasstroms zu erhöhen oder zu verringern.

12. Verfahren nach Anspruch 11, wobei der erste Sensor ein Sensor für die relative Feuchtigkeit ist und das Verfahren ferner das Ermitteln eines Messwerts für die relative Feuchtigkeit mit dem Sensor für die relative Feuchtigkeit umfasst.

13. Verfahren nach Anspruch 11, wobei das Nachregeln des Kathodensystems ferner das Bestimmen eines Zieldrucks oder einer Zieltemperatur eines Kathodenabgasstroms auf der Grundlage der Stromdichte des Brennstoffzellenstapels, das Verwenden eines zweiten Sensors, um einen aktuellen Druck oder eine aktuelle Temperatur im Kathodenabgasstrom zu messen, das Ändern des aktuellen Drucks im Kathodenabgasstrom auf der Grundlage des Zieldrucks, das Ändern der aktuellen Temperatur im Kathodenabgasstrom auf der Grundlage der Zieltemperatur, das Ändern eines Massenstroms im Kathodensystem oder das Ändern einer Temperatur des Kathodenabgasstroms umfasst.

14. Verfahren nach Anspruch 11, ferner umfassend das Stören des Systems, um eine Änderung des Wassergehalt-Messwerts durch den ersten Sensor im Kathodenabgasstrom zu bewirken, das Vergleichen der Änderung des Wassergehalt-Messwerts mit einem erwarteten Wassergehalt-Messwert im Kathodenabgasstrom aufgrund der Störung, wobei bestimmt wird, dass, wenn die Änderung des Wassergehalt-Messwerts im Kathodenabgasstrom größer ist als der erwartete Wassergehalt-Messwert im Kathodenabgasstrom, der Brennstoffzellenstapel bei einer relativen Feuchtigkeit von mehr als etwa 100 % arbeitet.

15. Verfahren nach Anspruch 14, ferner umfassend das Verwenden der Differenz zwischen der Änderung des Wassergehalt-Messwerts im Kathodenabgasstrom und dem erwarteten Wassergehalt-Messwert im Kathodenabgasstrom, um den Betrieb des Brennstoffzellenstapels auszugleichen, um sicherzustellen, dass der Brennstoffzellenstapel bei einer relativen Feuchtigkeit von etwa 100 % arbeitet.

## Revendications

1. Système de piles à combustible comprenant :
un empilement de piles à combustible incluant une anode et une cathode, un orifice d'entrée de cathode, un orifice d'échappement de cathode, un flux d'air d'entrée de cathode et un flux d'échappement de cathode,
un échangeur de chaleur situé en aval de l'orifice d'échappement de cathode,
un capteur positionné en aval de l'échangeur de chaleur pour détecter un relevé de teneur en eau du flux d'échappement de cathode, et
un dispositif de commande pour déterminer le fonctionnement de l'empilement de piles à combustible sur la base du relevé de teneur en eau,
dans lequel l'échangeur de chaleur est configuré pour augmenter une température du flux d'échappement de cathode et pour diminuer la teneur en eau du flux d'échappement de cathode.

2. Système de piles à combustible selon la revendication 1, dans lequel le capteur est un capteur d'humidité relative et le relevé de teneur en eau est un relevé d'humidité relative comprenant un relevé de teneur en vapeur d'eau dans le flux d'échappement de cathode.

3. Système de piles à combustible selon la revendication 2, dans lequel le dispositif de commande utilise une optimisation en boucle fermée de l'empilement de piles à combustible sur la base du relevé d'humidité relative lors de la détermination du fonctionnement de l'empilement de piles à combustible.

4. Système de piles à combustible selon la revendication 2, dans lequel le capteur d'humidité relative est situé au niveau de l'orifice d'échappement de cathode.

5. Système de piles à combustible selon la revendication 2, comprenant en outre un premier capteur de température positionné en amont de l'échangeur de chaleur et un second capteur de température positionnée en aval de l'échangeur de chaleur, dans lequel l'échangeur de chaleur est configuré pour augmenter la température de flux d'échappement de cathode sur la base des premier et second capteurs de température.

6. Système de piles à combustible selon la revendication 2, comprenant en outre un compresseur d'air, dans lequel le compresseur d'air est configuré pour fournir de l'air conditionné en amont du capteur d'humidité relative et diluer le flux d'échappement de cathode, dans lequel le compresseur d'air est configuré pour diluer le flux d'échappement de cathode sur la base d'un rapport de pression du compresseur d'air.

7. Système de piles à combustible selon la revendication 6, dans lequel l'air conditionné est introduit en amont du capteur d'humidité relative.

8. Système de piles à combustible selon la revendication 2, dans lequel un flux d'air de contournement est introduit en amont du capteur d'humidité relative pour diluer le flux d'échappement de cathode.

9. Système de piles à combustible selon la revendication 2, dans lequel le capteur d'humidité relative est situé sur une conduite d'échappement de cathode séparée comprenant un élément chauffant, et dans lequel l'élément chauffant augmente la température de l'air dans la conduite d'échappement de cathode séparée d'une quantité définie.

10. Système de piles à combustible selon la revendication 1, dans lequel le système comprend en outre une sonde lambda à plage large dans le flux d'échappement de cathode configuré pour détecter une concentration en oxygène du flux d'échappement de cathode.

11. Procédé de fonctionnement d'un empilement de piles à combustible comprenant :
la détermination d'une teneur en eau cible ou d'une humidité relative cible du flux d'échappement de cathode sur la base de la densité de courant de l'empilement de piles à combustible,
l'augmentation d'une température du flux d'échappement de cathode et la diminution d'une teneur en eau du flux d'échappement de cathode en mettant en oeuvre un échangeur de chaleur en aval d'un orifice d'échappement de cathode, dans lequel l'échangeur de chaleur diminue par enthalpie la pression en amont du capteur d'humidité relative, et
l'utilisation d'un premier capteur pour mesurer la teneur en eau du flux d'échappement de cathode, et
l'ajustement du système de cathode en mettant en oeuvre un dispositif de commande pour augmenter ou diminuer la teneur en eau mesurée du flux d'échappement de cathode sur la base de la teneur en eau cible ou de l'humidité relative cible du flux d'échappement de cathode.

12. Procédé selon la revendication 11, dans lequel le premier capteur est un capteur d'humidité relative et le procédé comprend en outre la détection d'un relevé d'humidité relative avec le capteur d'humidité relative.

13. Procédé selon la revendication 11, dans lequel l'ajustement du système de cathode comprend en outre la détermination d'une pression cible ou d'une température cible d'un flux d'échappement de cathode sur la base de la densité de courant de l'empilement de piles à combustible, l'utilisation d'un second capteur pour mesurer une pression actuelle ou une température actuelle dans le flux d'échappement de cathode, la variation de la pression actuelle sur la base de la pression cible dans le flux d'échappement de cathode, la variation de la température actuelle dans le flux d'échappement de cathode sur la base de la température cible, la variation d'un débit massique dans le système de cathode, ou la variation d'une température du flux d'échappement de cathode.

14. Procédé selon la revendication 11, comprenant en outre la perturbation du système pour provoquer une variation dans le relevé de teneur en eau par le premier capteur dans le flux d'échappement de cathode, la comparaison de la variation du relevé de teneur en eau à un relevé de teneur en eau attendu dans le flux d'échappement de cathode dû à la perturbation, dans lequel si la variation du relevé de teneur en eau dans le flux d'échappement de cathode est supérieure au relevé de teneur en eau attendu dans le flux d'échappement de cathode, l'empilement de piles à combustible est déterminé comme fonctionnant à plus d'environ 100 % d'humidité relative.

15. Procédé selon la revendication 14, comprenant en outre l'utilisation de la différence entre la variation du relevé de teneur en eau dans le flux d'échappement de cathode et le relevé de teneur en eau attendu dans le flux d'échappement de cathode pour compenser le fonctionnement de l'empilement de piles à combustible pour garantir que l'empilement de piles à combustible fonctionne à environ 100 % d'humidité relative.
